(19) **Europäisches Patentamt / European Patent Office / Office européen des brevets**

(11) **EP 3 806 354 A1**

(12) **EUROPEAN PATENT APPLICATION**

(43) Date of publication:
**14.04.2021 Bulletin 2021/15**

(51) Int Cl.:
**H04B 17/14** (2015.01)

(21) Application number: **20200561.7**

(22) Date of filing: **07.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.10.2019 FI 20195857**

(71) Applicant: **Nokia Technologies Oy**
**02610 Espoo (FI)**

(72) Inventor: **NIELSEN, Kim**
**9280 Storvorde (DK)**

(74) Representative: **Nokia EPO representatives**
**Nokia Technologies Oy**
**Karakaari 7**
**02610 Espoo (FI)**

(54) **MEASURING DELAYS IN MIMO TRANSCEIVER**

(57) There is provided aligning timing of Multiple Input Multiple Output, MIMO, transmissions. A method comprises measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set. On the basis of the measured delays, one or more delay configurations for baseband signals fed to the RF frontend transmission paths for aligning timing of transmissions across the antenna ports are determined.

Fig. 9

EP 3 806 354 A1

**Description**

## TECHNICAL FIELD

The present invention relates to measuring delays in a Multiple Input Multiple Output (MIMO) transceiver.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

In a Multiple Input Multiple Output (MIMO) transceiver, time alignment between antennas suffers from delay differences between Radio Frequency (RF) frontend transmission paths. The delay differences add to a total timing budget for a MIMO transmission which reduces available timing margins for other contributors such as Numerology/Sampling Time granularity, User Equipment (UE) Downlink Frame Sync, propagation channel (Signal-Noise-Ratio, Delay Spread), temperature drift, Doppler effect, Distance and Timing Advance.

Time critical communications such as in Time Synchronized Networks (TSNs), the impose requirements on accuracy of timing, whereby there is pressure to reduce timing margins in the timing budget.

## SUMMARY

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According some aspects, there is provided the subject matter of the independent claims. Some further aspects are defined in the dependent claims. The embodiments that do not fall under the scope of the claims are to be interpreted as examples useful for understanding the disclosure.

According to a first aspect there is provided an apparatus comprising:

means for measuring delays between a calibration signal fed to an antenna port via an RF frontend transmission path of a Multiple Input Multiple Output ,MIMO, transceiver comprising a plurality of antenna ports connected to RF frontend transmission paths and the calibration signal received at one or more other antenna ports of the MIMO transceiver,

wherein the calibration signal is fed to each of the antenna ports at a time for measuring at least one delay according to a measurement set; and

means for determining, on the basis of the measured delays, one or more delay configurations for baseband signals fed for the RF frontend transmission paths for aligning timing of transmissions across the antenna ports.

According to a second aspect there is provided a method comprising:

measuring delays between a calibration signal fed to an antenna port via an RF frontend transmission path of a Multiple Input Multiple Output, MIMO, transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and

determining, on the basis of the measured delays, one or more delay configurations for baseband signals fed to the RF frontend transmission paths for aligning timing of transmissions across the antenna ports.

According to a third aspect there is provided an apparatus comprising:

a processor; and

- a Multiple Input Multiple Output, MIMO, transceiver;
- wherein the processor is configured to:
  measure delays between a calibration signal fed to an antenna port via an RF frontend transmission path of the MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and

determine, on the basis of the measured delays, one or more delay configurations for baseband signals fed to the RF frontend transmission paths for aligning timing of transmissions across the antenna ports.

According to a fourth aspect there is provided a computer program comprising computer readable program code means adapted to perform at least the following:

measuring delays between a calibration signal fed to an antenna port via an RF frontend transmission path of a Multiple Input Multiple Output, MIMO, transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and
determining, on the basis of the measured delays, one or more delay configurations for baseband signals fed to the RF frontend transmission paths for aligning timing of transmissions across the antenna ports.

According to a fifth aspect, there is provided a computer program according to an aspect embodied on a computer readable medium.
At least some embodiments provide that a delay margin for the time alignment of the antenna ports may be reduced in a timing budget for MIMO transmissions.

## BRIEF DESCRIPTION OF THE DRAWINGS

For a more complete understanding of example embodiments of the present invention, reference is now made to the following descriptions taken in connection with the accompanying drawings in which:

Fig. 1 shows a part of an exemplifying wireless communications access network in accordance with at least some embodiments of the present invention;
Fig. 2 shows a block diagram of an apparatus in accordance with at least some embodiments of the present invention;
Fig. 3 shows an apparatus in accordance with at least some embodiments of the present invention;
Fig. 4 shows an example of an arrangement for wireless communications comprising a plurality of apparatuses, networks and network elements;
Fig. 5 illustrates example of methods in accordance with at least some embodiments of the present invention;
Fig 6 illustrates a sequence in accordance with at least some embodiments of the present invention;
Fig. 7 illustrates a calibration method in accordance with at least some embodiments of the present invention;
Fig. 8 illustrates an example of calibration points for time alignment of antenna ports of a MIMO transceiver in accordance with at least some embodiments of the present invention;
Fig. 9 illustrates an example of measuring delays in accordance with at least some embodiments of the present invention; and
Fig. 10 illustrates an example of a block diagram of an apparatus in accordance with at least some embodiments of the present invention.

## DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.
In connection with a MIMO transceiver there is provided a method comprising measuring delays between a calibration signal fed to an antenna port via an Radio Frequency (RF) frontend transmission path of the MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set. On the basis of the measured delays, it is determined one or more delay configurations for baseband signals fed to the RF frontend transmission paths for aligning timing of transmissions across the antenna ports. In this way a delay margin for the time alignment of the antenna ports may be reduced in a timing budget for MIMO transmissions and the timing of transmissions across the antenna ports is aligned. Aligning the timing of the transmissions also supports improved accuracy of channel estimation and therefore improved quality of the transmissions. Reducing the delay margin is particularly beneficial for time synchronized networks (TSNs), where time synchronization accuracy over Uu interface is impacted by gNB TX time alignment error (TAE) that is the largest frame timing difference between any two signals belonging to different antenna connectors for a specific set of signals/transmitter configuration/transmission modes at the gNB. According to 3GPP TS 38.104 V16.0.0 (2019-06) Section 6.5.3.2, TAE shall not exceed $\pm 65$ns.

An RF frontend comprises RF circuitry between a baseband processor and one or more antenna ports. The RF frontend comprises a transmission path/chain and a reception path/chain. Examples of circuitry of the RF frontend comprise one or more band-pass filters, power amplifiers, local oscillators, and mixers. The transmission path converts a baseband signal to RF signal for feeding the RF signal to antenna via an antenna port. The reception path converts an RF signal received by an antenna connected to an antenna port to a baseband signal that is fed to the baseband part. The conversion of the signal between the baseband processor and the antenna port may be via at least one intermediate frequency. The RF frequencies may be licensed or unlicensed frequencies. Examples in accordance with at least some embodiments may utilize at least RF frequencies below 6GHz.

A baseband signal comprises an unmodulated signal or a modulated signal comprising one or more symbols according to a modulation method. The baseband signal may be an IQ signal comprising an in-phase and a quadrature phase. An example of the modulation method is a multi-carrier modulation method such as an orthogonal frequency-division multiplexing (OFDM) scheme. The OFDM symbols may form a transmission burst for a communications channel of a wireless communications system. Examples of the communications channels comprise at least shared and dedicated communications channels that may be uplink, UL, channels or downlink, DL, channels. An uplink channel refers to a channel for transmitting data from a wireless device to an access node and a downlink channel refers to a channel for transmitting data from an access node to a wireless device.

MIMO in wireless communications is a technique that enables the transmission and reception of multiple independent data streams. This helps to increase the maximum data rate at which communications can occur reliably. Some applications of MIMO are described in the following sections.

A MIMO transceiver, MIMO TRX, comprises at least an RF frontend and antenna ports for connecting to multiple antennas for transmission, TX, and reception, RX, of a MIMO transmission. The MIMO transceiver may be capable of single antenna transmissions, e.g. Single input Multiple output, single input single output. The RF frontend may be connected to a baseband processor. The RF frontend comprise a plurality of unique hardware (HW) paths through the RF front between the baseband processor and antenna ports. The HW paths comprise transmission paths and reception paths. Each of the HW paths introduce a delay that is characteristic for a specific transmission path. A base band signal for a MIMO transmission is processed by two or more transmission paths and fed to at least two antennas via antenna ports. Transmission times of the signal via each of the antennas should be time aligned for reducing a delay margin required of the MIMO transmission.

A baseband transceiver, TRX, may be a baseband processor that performs baseband processing of transmitted and received signals via an RF frontend. A typical interface between the baseband processor and the RF frontend comprises an analog-to-digital converter, ADC, and a digital-to-analog converter, DAC. The baseband processor processes baseband signals for transmission and reception by the RF frontend.

A delay configuration may define delays for baseband signals that are fed to RF frontend transmission paths. A delay may be defined specific to each transmission path. The delay configuration may be applied at a baseband processor to the baseband signals that are fed to RF frontend such that timing of MIMO transmissions across antenna ports may be aligned. It should be appreciated that, since there is a strong relation between the technique of delaying the transmission and affecting the radio propagation pattern, the delay configuration may be applied provided the radio propagation patterns of the antennas may be maintained or at least the radio propagation patterns of the antennas may be controlled to accommodate changes to the radio propagation patterns caused by the delay configuration. For example, for devices in sub-6 GHz range and even pico-cells the delay configuration may be applied without being specific to direction of the antennas. However, typically this is not the case for gNB's having antenna panels in different directions. Therefore, it is important to the gNB's that the transmission delay is tuned so that the antenna panel has an exact propagation direction and coverage. In an example, the delay configuration may be applied at least in UEs and pico-cells that have omni-directional radiation patterns. In this way the timing of omni-directional transmissions may be aligned by the delay configuration. On the other hand, for a gNB that has antenna panels directed to specific locations, delaying the signal between antenna elements could interfere with a mechanism (digital phase adjustment) used for shaping the antenna pattern.

At least some of the embodiments may be applied in a wireless communication system or a wireless communication network that supports TSN. 5G standard is seen as one example that could fit to meet very stringent requirements in terms of both latency and reliability as well as highly precise synchronization accuracy of the applications running over TSN networks. Also other standards may be feasible.

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), Zig-Bee®, wideband code division multiple access (WCDMA), systems using ultra-wideband (UWB) technology, sensor networks, mobile ad-hoc networks (MANETs) and Internet protocol multimedia subsystems (IMS) or any combination thereof.

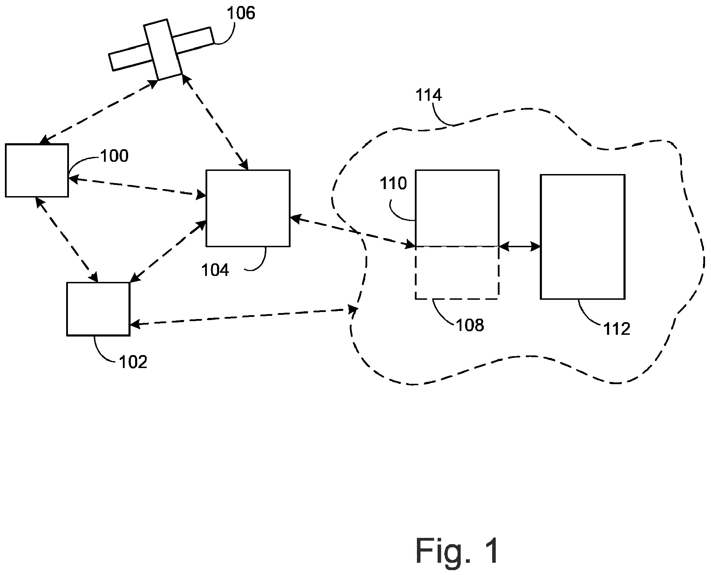

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows user devices 100 and 102 configured to be in a wireless connection on one or more communication channels in a cell with an access node (such as (e/g)NodeB) 104 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells.

Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

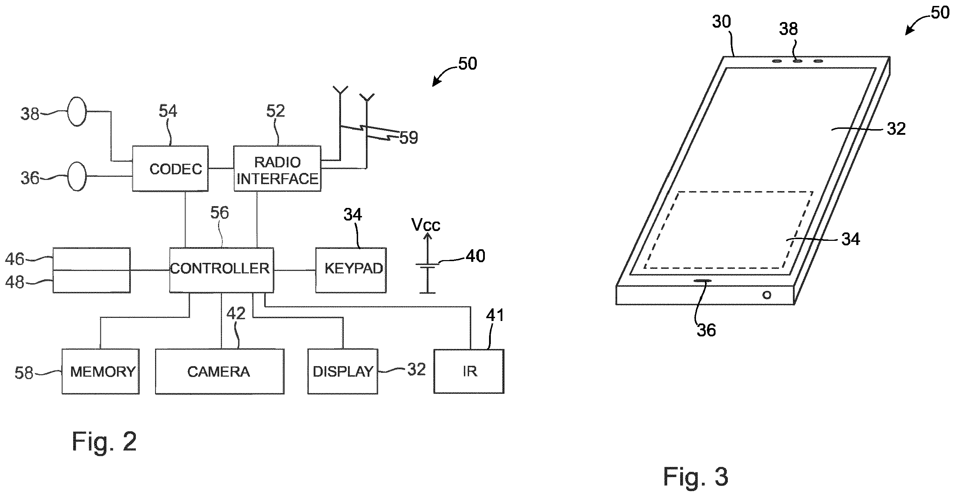

The following describes in further detail suitable apparatus and possible mechanisms for implementing some embodiments. In this regard reference is first made to Fig. 2 which shows a schematic block diagram of an exemplary apparatus or electronic device 50 depicted in Fig. 3, which may incorporate a transmitter according to an embodiment of the invention.

The electronic device 50 may for example be a wireless device, mobile terminal or user equipment of a wireless communication system. However, it would be appreciated that embodiments of the invention may be implemented within any electronic device or apparatus which may require transmission of radio frequency signals.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The term battery discussed in connection with the embodiments may also be one of these mobile energy devices. Further, the apparatus 50 may comprise a combination of different kinds of energy devices, for example a rechargeable battery and a solar cell. The apparatus may further comprise an infrared port 41 for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the invention may store both data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a universal integrated circuit card (UICC) reader and UICC for providing user information and being suitable for providing authentication information for authentication and authorization of the user at a network.

The apparatus 50 may comprise radio interface circuitry 52 (also can be called as radio frequency module) connected to the controller (or the processor) and suitable for generating wireless communication signals for example for communication with a cellular communications network, a wireless communications system or a wireless local area network. The radio interface circuitry 52 includes one or more transmitters and one or more receivers. In this case, the transmitter and the receiver can be configured to one entity such as a radio transceiver. The apparatus 50 may further comprise a plurality of antennas 59 connected to the radio interface circuitry 52 for transmitting radio frequency signals generated at the radio interface circuitry 52 to other apparatus(es) and for receiving radio frequency signals from other apparatus(es).

In some embodiments of the invention, the apparatus 50 comprises a camera 42 capable of recording or detecting imaging.

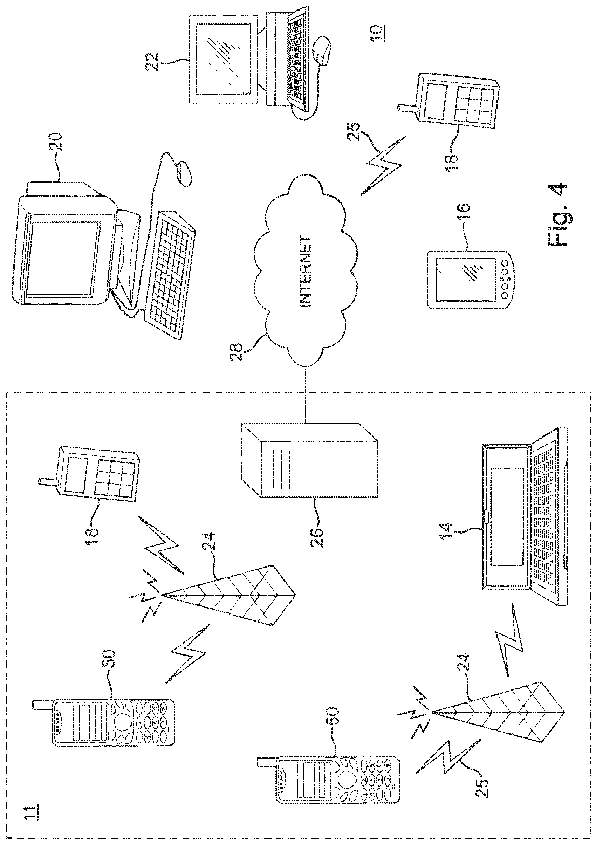

With respect to Fig. 4, an example of a system within which embodiments of the present invention can be utilized is shown. The system 10 comprises multiple communication devices which can communicate through one or more networks. The system 10 may comprise any combination of wired and/or wireless networks including, but not limited to a wireless cellular telephone network (such as a GSM (2G, 3G, 4G, LTE, 5G), UMTS, CDMA network etc.), a wireless local area network (WLAN) such as defined by any of the IEEE 802.x standards, a Bluetooth personal area network, an Ethernet local area network, a token ring local area network, a wide area network, and the Internet.

For example, the system shown in Fig. 4 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a tablet computer. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11, Long Term Evolution wireless communication technique (LTE) and any similar wireless communication technology. Yet some other possible transmission technologies to be mentioned here are high-speed downlink packet access (HSDPA), high-speed uplink packet access (HSUPA), LTE Advanced (LTE-A) carrier aggregation dual- carrier, and all multi-carrier technologies. A communications device involved in implementing various embodiments of the present invention may communicate using various media including, but not limited to, radio, infrared, laser, cable connections, and any suitable connection. In the following some example implementations of apparatuses utilizing the present invention will be described in more detail.

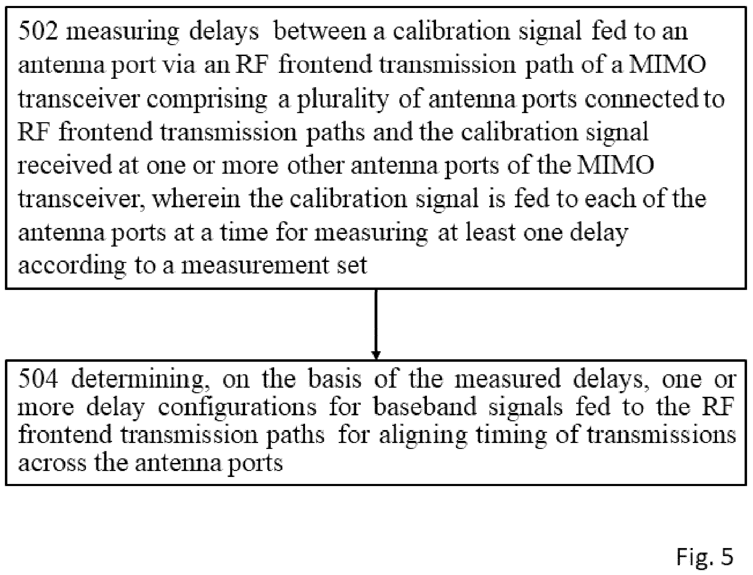

Figs. 5 illustrates example of methods in accordance with at least some embodiments of the present invention. The method may be performed at a wireless device, relay station or an access node of a communication system, for example a UE, IoT device or a gNB. However, in the following the method is described performed at the wireless device for aligning UL MIMO transmissions across antenna ports.

Phase 502 comprises measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set.

Phase 504 comprises determining, on the basis of the measured delays, one or more delay configurations for baseband signals fed to the RF frontend transmission paths for aligning timing of transmissions across the antenna ports.

In this way a delay margin for the time alignment of the antenna ports may be reduced in a timing budget for MIMO transmissions and the timing of transmissions across the antenna ports is aligned. Aligning the timing of the transmissions also supports improved accuracy of channel estimation and therefore improved quality of the transmissions. Reducing the delay margin is particularly beneficial for time synchronized networks (TSNs), where time synchronization accuracy over Uu interface is impacted by gNB TX time alignment error (TAE) that is the largest frame timing difference between any two signals belonging to different antenna connectors for a specific set of signals/transmitter configuration/transmission modes at the gNB. According to 3GPP TS 38.104 V16.0.0 (2019-06) Section 6.5.3.2, TAE shall not exceed $\pm 65$ns.

In an example in accordance with at least some embodiments, phase 502 comprises that the calibration signal comprises an unmodulated signal wave or a predefined transmission burst. The calibration signal may be a known signal for facilitating measuring the delays. An example of an unmodulated signal is a sine wave. The predefined transmission burst may be selected such that a delay between a transmitted and received calibration signal can be measured by cross-correlation of the transmitted calibration signal and the calibration signal received via one or more of the other antenna ports support. Examples of the calibration signals comprise at least Physical Random Access Channel (PRACH) and data channel transmissions. It should be appreciated that the form of the calibration signal, e.g. a modulation and coding of the transmitted calibration signal, is known at the baseband, i.e. by a baseband processor, which facilitates measuring the delay based on the transmitted and received calibration signals.

In an example in accordance with at least some embodiments, phase 502 comprises that the delays are measured using single antenna transmissions. In this way interference from other antennas may be mitigated.

In an example in accordance with at least some embodiments, phase 502 comprises that the measurement set comprises one or more parameters for determining a transmission configuration of the RF frontend transmission paths. In this way the delays measured by the measurement set may provide accurate timing alignment across the antenna ports for the transmission configuration.

In an example in accordance with at least some embodiments, phase 502 comprises that the measurement set comprises one or more parameters of for example a phase/time, power level, reference measurement antenna, frequency, phase shifter configuration, transmission antenna port, antenna tuner, configurable band pass filters, band of operation. Measurements of the delays using these parameters provide that a delay configuration may be defined for a transmission configuration having the same or similar parameter values.

In an example in accordance with at least some embodiments, phase 504 comprises that the delay configuration is determined during a runtime operation of the apparatus and/or during production of the apparatus.

Determining the delay configuration has the benefit that the delay configuration may be stored in device memory, e.g. on a baseband TRX, for look-up when MIMO transmission is to take place. Determining the delay configuration during a production provides a production calibration. Determining the delay configuration during a production may be performed in a controlled environment, e.g. anechoic chamber, with no interference and the calibration can be conducted across the antenna elements without violating RF transmission requirements for Transmission Off state (-50dBm). This means that in production the device can transmit with any and all output power levels within its capabilities. The calibration can be fast, since the calibration signal may be an unmodulated signal e.g. a sine wave, that is measured on the receiving antennas that are "free" during transmission of the antenna undergoing calibration. Thanks to determining the delay configuration during production, a measurement set for the delay measurements may be very large and made to scale with any configurable setting of times power levels, frequency points, antennas and bands. This means that the delay configuration stored to the memory of the wireless device may provide delay configurations for most transmission configurations for the MIMO transceiver.

Determining the delay configuration during a runtime operation of the wireless device provides a runtime calibration. The delay measurements may be performed "on-the-fly", while conforming to the requirements of the licensed frequency bands and compliance to standard authorities. The runtime calibration may be performed inside a transmission burst when the device is allowed to transmit. The delay for each port may be obtained through a cross correlation between the transmitted signal and the received signal on in the baseband. Accordingly, the transmitted signal and the received signal may be cross-correlated on IQ level.

Determining the delay configuration during a runtime operation of the apparatus and during production of the apparatus provides improving the production calibration based on the runtime calibration. In an example, determining the delay configuration during production provides one or more of:

- saving of memory, so only partial calibration points are taken and not the superset of point
- saving calibration time in factory and letting the runtime calibration fill the data over time
- hardware aging allowing the runtime calibration to update the factory calibration points. Accordingly, the runtime calibration may be combined with the production calibration such that at least one of: further calibration points may be determined and updating the calibration points.

The runtime calibration may be forced to be performed during single antenna operation (UL MIMO would make the more-than-one TX signal corrupt the feedback) on a particular band characterizing the settings slot-by-slot and having to do only with the data captured until the device transitions to UL MIMO, where it will use the data. This means that the device should only be able to store a calibration data set of the bands that are active during runtime. Since the calibration is done runtime it may account for aging and current conditions better than determining the delay configuration during production. It may also serve for HW failure detection.

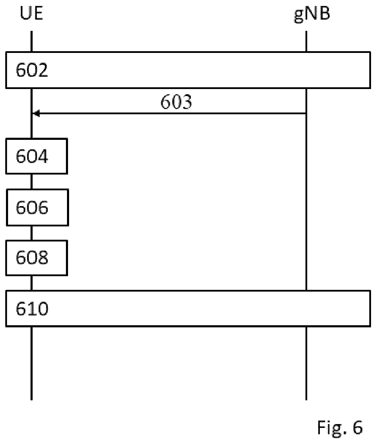

Fig. 6 illustrates a sequence in accordance with at least some embodiments of the present invention. The sequence is illustrated between a user equipment (UE) and a gNB of a wireless communication system. The UE and gNB may be connected by a communications channel of a wireless communication system.

Phase 602 comprises measuring delays in accordance with phase 502 in Fig. 5. In accordance with at least some embodiments phase 502 comprises that the delays are measured using a calibration signal that is a predefined transmission burst. In accordance with at least some embodiments the predefined transmission burst is a single antenna transmission on the communications channel of the wireless communication system and the antenna port for the single antenna transmission is switched for measuring the delays on the basis of the single antenna transmissions on the communications channel and the calibration signal received at said one or more other antenna ports.

In an example in accordance with at least some embodiments, phase 602 comprises measuring the delays using single antenna transmissions. Phase 603 comprises receiving a grant for a MIMO transmission on the communications channel. Phase 610 comprises in response to receiving the grant for the MIMO transmission on the communications channel, transmitting a MIMO transmission on the basis of a delay configuration determined on the basis of the measured delays based on the single antenna transmissions.

In an example in accordance with at least some embodiments, phase 604 comprises determining a transmission configuration for the MIMO transmission by the RF frontend transmission paths. Phase 606 comprises determining a delay configuration corresponding to the transmission configuration. Phase 608 comprises applying the determined delay configuration. Phase 610 comprises transmitting the MIMO transmission.

In an example the transmission configuration may be determined to comply with a resource allocation on a communications channel for the MIMO transmission, e.g. a grant for the MIMO transmission. A delay configuration corresponding to the transmission configuration may be determined on the basis of correspondence of the parameters the measurement set with the transmission configuration. The delay configuration may be determined to be a delay configuration that is measured by parameters of the measurement set that correspond at least significantly with the transmission configuration.

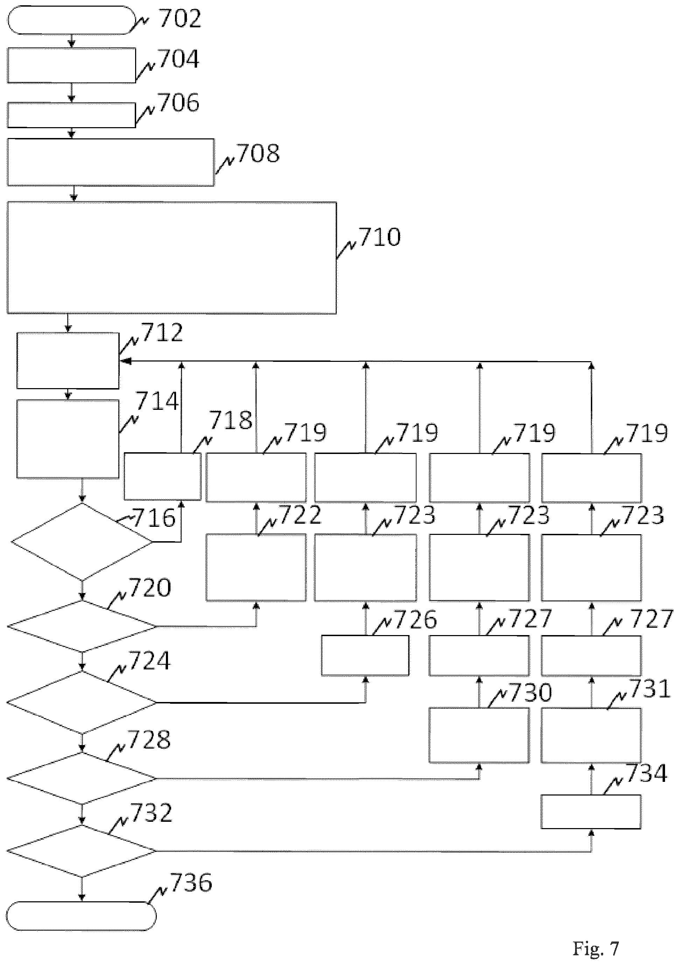

Fig. 7 illustrates a calibration method in accordance with at least some embodiments of the present invention. The method may be performed at a wireless device, relay station or an access node of a communication system, for example a UE, IoT device or a gNB. In the following the method is described performed at the wireless device for aligning UL MIMO transmissions across antenna ports. The calibration method comprises measuring delays in accordance with phase 502 in Fig. 5. The method is described using only some of possible measurements in a measurement set. It should be appreciated that that the measurement set may depend on implementation of the RF frontend.

Phase 702 comprises starting the calibration.

Phase 704 comprises placing the wireless device in an anechoic chamber.

Phase 706 comprises powering on the wireless device.

Phase 708 comprises reading calibration configuration parameters from device memory. The calibration configuration parameters may comprise parameters of a measurement set for measuring the delays. In this example the parameters comprise power levels, RX and TX frequency channels, phase shifter configurations and information indicating antennas to be calibrated.

Phase 710 comprises defining an initial measurement setup. The initial measurement setup may be determined on the basis of the calibration configuration parameters. In an example the initial measurement setup comprises an initial parameter value for each parameter of the calibration configuration parameters.

Phase 712 comprises measuring a delay at reference antenna TRX

Phase 714 comprises storing the measured delay in a calibration data structure. In this way a calibration point for a current measurement setup may be generated. Accordingly, each calibration point may be defined by parameter values used for measuring the delay.

Phase 716 comprises determining whether the delay has been measured using all output power levels. In an example the power levels may be measured one at a time and once the last or lowest power level has been measured in phase 712, it may be determined that the delay has been measured using al output power levels. The method proceeds to 720 if the delay has been measured using all output power levels. Otherwise, the method proceeds to phase 718.

Phase 718 comprises selecting another power level for measuring the delay and the method proceeds to phase 712. In an example the power levels may be traversed in an order from the highest power level to the lowest, whereby phase 718 may comprise decreasing the power level.

Phase 720 comprises determining whether the delay has been measured using all frequency points. In an example the frequency points may be measured one at a time and once the last, lowest frequency or highest point has been measured in phase 712, it may be determined that the delay has been measured using all frequency points. The method proceeds to 724 if the delay has been measured using all output power levels. Otherwise, the method proceeds to phase 722.

Phase 722 comprises selecting another frequency point for measuring the delay and the method proceeds to phase 719. In an example the frequency points may be traversed in an order from the highest frequency point to the lowest or vice versa, whereby phase 722 may comprise e.g. increasing the frequency. Phase 719 comprises resetting output power level to highest power.

Phase 724 comprises determining whether the delay has been measured using all phase shifter configurations. In an example the frequency points may be measured one at a time and once the last phase shifter configuration has been measured in phase 712, it may be determined that the delay has been measured using all phase shifter configurations. The method proceeds to 728 if the delay has been measured using all phase shifter configurations. Otherwise, the method proceeds to phase 726.

Phase 726 comprises selecting another phase shifter configuration for measuring the delay and the method proceeds to phase 723. In an example the phase shifter configurations may be traversed as an ordered list, whereby phase 726 may comprise selecting the next the phase shifter configuration, e.g. increasing the phase shifter state. Phase 723 comprises resetting frequency points to the lowest frequency.

Phase 728 comprises determining whether the delay has been measured using all reference measurement antennas. In an example the reference measurement antennas may be measured one at a time and once the last reference measurement antenna has been measured in phase 712, it may be determined that the delay has been measured using all reference measurement antennas. The method proceeds to 732 if the delay has been measured using all reference measurement antennas. Otherwise, the method proceeds to phase 730.

Phase 730 comprises selecting another reference measurement antenna for measuring the delay and the method proceeds to phase 727. In an example the reference measurement antennas may be traversed as an ordered list, whereby phase 726 may comprise changing the reference measurement antenna to a next one. Phase 727 comprises resetting phase shifter configurations to the first phase shifter configuration.

It should be appreciated that at least in accordance with at least some embodiments, the reference measurement antennas may be activated simultaneously for receiving the calibration signal, whereby the phase 728 and phases 730, 727, 723 and 719 following the phase 730 may be omitted. Accordingly, in such a case phase 712 may comprise measuring delays of a transmitted calibration signal received at multiple TRXs, e.g. via all of the reference measurement antennas.

Phase 732 comprises determining whether the delay has been measured using all antennas for transmitting a calibration signal. In an example the antennas may be measured one at a time and once the last antenna has been used for transmitting the calibration signal and measured in phase 712, it may be determined that the delay has been measured using all antennas for transmitting a calibration signal. The method proceeds to 736 if the delay has been measured using all antennas for transmitting a calibration signal. Otherwise, the method proceeds to phase 734.

Phase 734 comprises selecting another antenna for transmitting a calibration signal for measuring the delay and the method proceeds to phase 731. In an example the antennas for transmitting a calibration signal may be traversed as a list of antennas, whereby phase 726 may comprise changing a current antenna for transmitting a calibration signal to a next antenna. Phase 731 comprises resetting the reference measurement antenna.

In an example, where the MIMO transceiver comprises more than one transmission path connected to one or more antennas and/or more than one receiver chains connected to one or more antennas, the measurement set of measuring the delays may define a measurement for each of the transmission paths and receiver chains. Accordingly, in the method of Fig. 7, alternatively or additionally to traversing reference measurement antennas, e.g. in phase 730, and antennas for transmitting a calibration signal, e.g. in phase 734, the transmission paths receiver chains may be traversed. The calibration configuration parameters may comprise parameters for performing the measurements of the transmission paths and/or receiver chains.

In phase 736 the calibration method is at end after calibration points comprising a delay for all combinations of calibration configuration parameters have been determined.

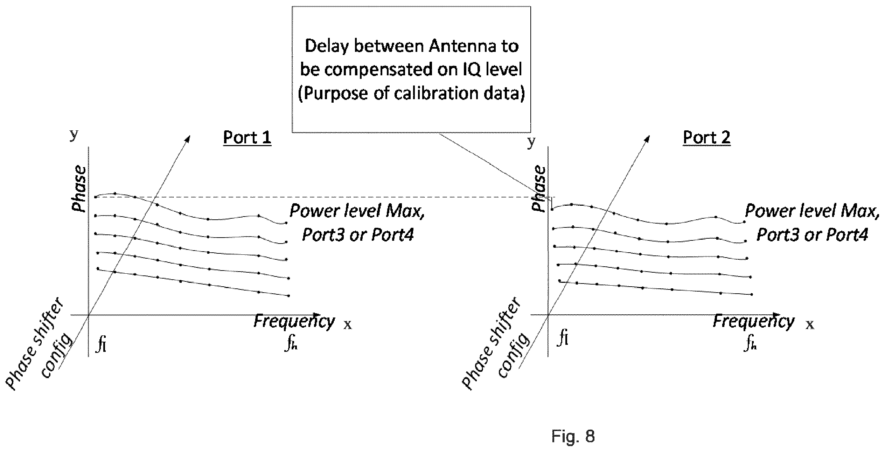

Fig. 8 illustrates an example of calibration points for time alignment of antenna ports of a MIMO transceiver in accordance with at least some embodiments of the present invention. The calibration points may be determined by parameters of a measurement set used for measuring delays and the measured delays. Accordingly, each calibration point may be defined by a measured delays and parameters for the measurement set used to measure the delay. The calibration points are illustrated for measured delays of antenna port 1 and antenna port 2 of 4x4 MIMO transceiver having four antennas for four simultaneous data streams. Fig. 8 illustrates the calibration points with respect to phase and frequency and a single phase shifter configuration. The phase is shown the y-axis, frequency on the x-axis and the phase shifter configuration is illustrated by an additional axis. The calibration points are illustrated by black dots at five power levels using antenna ports 3 or 4 as a reference measurement antenna. A measured delay between the antenna ports 1 and 2 is shown by a dashed line indicating a difference of the phases. The delay may be compensated by applying a delay to a baseband signal before the base band signal is fed to an RF frontend. The dashed line indicates that a delay measured for a calibration signal transmitted via the antenna port 2 higher than a delay measured for a calibration signal transmitted via the antenna ports. Accordingly, the antenna port 2 is slower, whereby the faster port, antenna port 1, should be adapted to the antenna port 2 for time alignment of a MIMO transmission across the antenna ports. Accordingly, a delay may be added to the base band signal fed to the RF front of the antenna port 1. When the device is set into normal operation mode the time delay to be applied may be calculated and applied prior to any transmission, based on the calibration points.

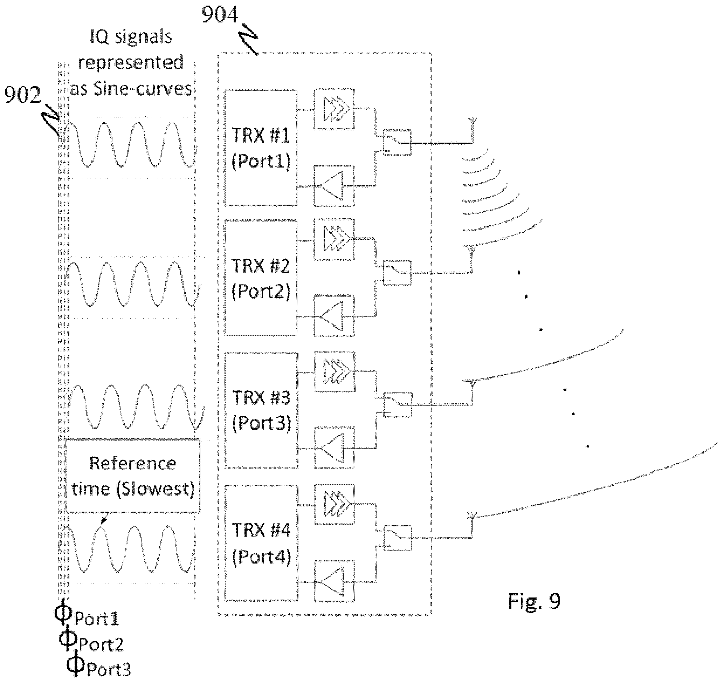

Fig. 9 illustrates an example of measuring delays in accordance with at least some embodiments of the present invention. A MIMO transceiver 904 comprises baseband TRXs, TRX #1, TRX #2, TRX #3, TRX #4, connected to RF frontends.

In an example of measurement of the delays, one of the antennas is selected at a time for transmitting a calibration signal 902, e.g. an IQ signal, that is fed to an antenna port via an RF frontend. In this example the calibration signal is transmitted via a transmission path and antenna connected to TRX #1. The transmitted calibration signal is received at the other TRXs via their respective antennas. The RF frontend transmission path connected to TRX #1 causes a delay that may be measured at the other TRXs, in accordance with 502 in Fig. 5. The measured delay is associated with parameters of a measurement set that determine a transmission configuration of the RF frontend transmission paths for the calibration signal and reference measurement antenna(s). The measurement set may comprise one or more parameters of a phase/time, power level, reference measurement antenna(s), frequency, phase shifter configuration, transmission antenna port, antenna tuner, configurable band pass filters, band of operation. Different configurations of the parameters may be measured separately such that delays for configurations may be obtained. The measurement results may be converted into calibration points that may be used for determining a transmission configuration such that transmission times across all antenna ports may be aligned. This may be done by comparing the delay of each configuration set and adapting to the slowest transmitting antenna port on all faster ports. Only the delta may be used to delay the IQ signal fed for the faster ports so that each port matches the slowest element. When the device is set into normal operation mode the time delay to be applied may be calculated and applied to the baseband signal prior to any transmission.

In the case of Fig. 9 the signal delay measured at TRX #4 is the slowest according to the measurements of delays across all supporting receive paths. The identification of this slowest path may be obtained as follows:

Delay(TXPort1)= Avg(Delay(RXPort2, RXPort3,RXPort4))
Delay(TXPort2)= Avg(Delay(RXPortl, RXPort3,RXPort4))
Delay(TXPort3)= Avg(Delay(RXPortl, RXPort2,RXPort4))
Delay(TXPort4)= Avg(Delay(RXPortl, RXPort2,RXPort3)),

where Delay(TXPort1) defines an average delay measured at reference antenna ports 2, 3 and 4 for a calibration signal transmitted via antenna port 1, Delay(TXPort2) defines an average delay measured at reference antenna ports 1, 3 and 4 for a calibration signal transmitted via antenna port 2, Delay(TXPort3) defines an average delay measured at reference antenna ports 1, 2 and 4 for a calibration signal transmitted via antenna port 3, Delay(TXPorts4) defines an average delay measured at reference antenna ports 1, 2 and 3 for a calibration signal transmitted via antenna port 1.

Then, for an UL MIMO transmission the port having the highest delay of the Delay(TXPort1), Delay(TXPort2), Delay(TXPort3), Delay(TXPort4) may be determined and the determined highest delay may be applied to a baseband signal fed to RF frontend transmission paths connected to any other port of the MIMO transceiver, subtracted with the port's own delay, thereby ensuring simultaneous transmission across the antenna elements. A simple mathematic representation of such signal and applying the delay is shown below through Port4 and Port2

$$S_{TX\_Port4} = A cos(2\pi\ fc \cdot t + \phi)$$

$$S_{TX\_Port2} = A cos(2\pi\ fc \cdot (t + Max(Delay(TXport4)) - Delay(TXport2)) + \phi)$$

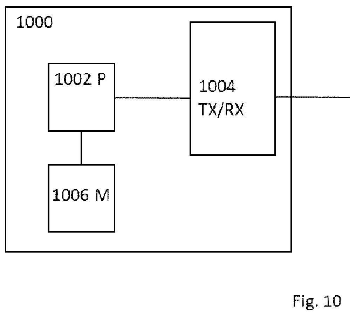

Fig. 10 illustrates an example of a block diagram of an apparatus in accordance with at least some embodiments of the present invention. The apparatus 1000 comprises a processor 1002 and a MIMO transceiver 1004. The processor is operatively connected to the transceiver for controlling the transceiver. The apparatus may comprise a memory 1006. The memory may be operatively connected to the processor. It should be appreciated that the memory may be a separate memory or included to the processor and/or the transceiver.

According to an embodiment, the processor is configured to control the transceiver and/or to perform one or more functionalities described with a method according to an embodiment.

According to an embodiment, there is provided an apparatus comprising means for measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and means for determining, on the basis of the measured delays, one or more delay configurations for baseband signals fed to the RF frontend transmission paths for aligning timing of transmissions across the antenna ports.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, " computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

Although the above examples describe embodiments of the invention operating within a wireless device or a gNB, it would be appreciated that the invention as described above may be implemented as a part of any apparatus comprising a circuitry in which radio frequency signals are transmitted and/or received. Thus, for example, embodiments of the invention may be implemented in a mobile phone, in a base station, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules, field-programmable gate arrays (FPGA), application specific integrated circuits (ASIC), microcontrollers, microprocessors, a combination of such modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

EXAMPLES

The following is a list of examples in accordance with at least some embodiments:

1. A method comprising:

- measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and
- determining, on the basis of the measured delays, one or more delay configurations for baseband signals fed to the RF frontend transmission paths for aligning timing of transmissions across the antenna ports.

2. The method according to example 1, comprising:

- determining a transmission configuration for a MIMO transmission by the RF frontend transmission paths;
- determining a delay configuration corresponding to the transmission configuration;
- applying the determined delay configuration;
- transmitting the MIMO transmission.

3. The method according to example 1 or 2, wherein the calibration signal comprises an unmodulated signal or a predefined transmission burst.

4. The method according to example 3, wherein the predefined transmission burst is a single antenna transmission on a communications channel of a wireless communication system and the antenna port for the single antenna transmission is switched for measuring the delays on the basis of the single antenna transmissions on the communications channel and the calibration signal received at said one or more other antenna ports.

5. The method according to any of examples 1 to 4, comprising:

- measuring the delays using single antenna transmissions; and
- in response to receiving a grant for a MIMO transmission on the communications channel, transmitting a MIMO transmission on the basis of a delay configuration determined on the basis of the measured delays based on the single antenna transmissions.

6. The method according to any of examples 1 to 5, wherein the measurement set comprises one or more parameters for determining a transmission configuration of the RF frontend transmission paths.

7. The method according to any of examples 1 to 6, wherein the measurement set comprises one or more parameters of a phase/time, power level, reference measurement antenna (s), frequency, phase shifter configuration, transmission antenna port, antenna tuner, configurable band pass filters, band of operation.

8. The method according to any of examples 1 to 7, wherein the delay configuration is determined during a runtime operation of an apparatus and/or a during production of the apparatus.

9. An apparatus comprising:

- means for measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and
- means for determining, on the basis of the measured delays, one or more delay configurations for baseband signals fed for the RF frontend transmission paths for aligning timing of transmissions across the antenna ports.

10. The apparatus according to example 9, comprising:

- means for determining a transmission configuration for a MIMO transmission by the RF frontend transmission paths;
- means for determining a delay configuration corresponding to the transmission configuration;
- means for applying the determined delay configuration;
- means for transmitting the MIMO transmission.

11. The apparatus according to example 9 or 10, wherein the calibration signal comprises an unmodulated signal or a predefined transmission burst.

12. The apparatus according to example 11, wherein the predefined transmission burst is a single antenna transmission on a communications channel of a wireless communication system and the antenna port for the single antenna transmission is switched for measuring the delays on the basis of the single antenna transmissions on the communications channel and the calibration signal received at said one or more other antenna ports.

13. The apparatus according to any of examples 9 to 12, comprising:

- means for measuring the delays using single antenna transmissions; and
- means for, in response to receiving a grant for a MIMO transmission on the communications channel;
- means for transmitting a MIMO transmission on the basis of a delay configuration determined on the basis of the measured delays based on the single antenna transmissions.

14. The apparatus according to any of examples 9 to 13, wherein the measurement set comprises one or more parameters for determining a transmission configuration of the RF frontend transmission paths.

15. The apparatus according to any of examples 9 to 14, wherein the measurement set comprises one or more parameters of a phase/time, power level, reference measurement antenna(s), frequency, phase shifter configuration, transmission antenna port, antenna tuner, configurable band pass filters, band of operation.

16. The apparatus according to any of examples 9 to 15, wherein the delay configuration is determined during a runtime operation of the apparatus and/or during a production of the apparatus.

17. An apparatus comprising:

- a processor; and
- a MIMO transceiver;
- wherein the processor is configured to:

    measure delays between a calibration signal fed to an antenna port via an RF frontend transmission path of the MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and
    determine, on the basis of the measured delays, one or more delay configurations for baseband signals fed to the RF frontend transmission paths for aligning timing of transmissions across the antenna ports.

18. The apparatus according to example 17, wherein the processor is configured to:

- determine a transmission configuration for a MIMO transmission by the RF frontend transmission paths;
- determine a delay configuration corresponding to the transmission configuration;
- apply the determined delay configuration;
- control the MIMO transceiver to transmit the MIMO transmission.

19. The apparatus according to example 17 or 18, wherein the calibration signal comprises an unmodulated signal or a predefined transmission burst.

20. The apparatus according to example 19, wherein the predefined transmission burst is a single antenna transmission on a communications channel of a wireless communication system and the antenna port for the single antenna transmission is switched for measuring the delays on the basis of the single antenna transmissions on the communications channel and the calibration signal received at said one or more other antenna ports.

21. The apparatus according to any of examples 17 to 20, wherein the processor is configured to:

- measure the delays using single antenna transmissions; and
- to control the MIMO transceiver to, in response to receiving a grant for a MIMO transmission on the communications channel, transmit a MIMO transmission on the basis of a delay configuration determined on the basis of the measured delays based on the single antenna transmissions.

22. The apparatus according to any of examples 17 to 21, wherein the measurement set comprises one or more parameters for determining a transmission configuration of the RF frontend transmission paths.

23. The apparatus according to any of examples 17 to 22, wherein the measurement set comprises one or more parameters of a phase/time, power level, reference measurement antenna(s), frequency, phase shifter configuration, transmission antenna port, antenna tuner, configurable band pass filters, band of operation.

24. The apparatus according to any of examples 17 to 23, wherein the delay configuration is determined during a runtime operation of an apparatus and/or a during production of the apparatus.

25. A computer program comprising computer readable program code means adapted to perform at least the following:

- measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set; and
- determining, on the basis of the measured delays, one or more delay configurations for baseband signals fed to the RF frontend transmission paths for aligning timing of transmissions across the antenna ports.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

**Claims**

1. A method :

   - measuring delays between a calibration signal fed to an antenna port via an RF frontend transmission path of a Multiple Input Multiple Output, MIMO, transceiver comprising a plurality of antenna ports connected to RF frontend transmission paths and the calibration signal received at one or more other antenna ports of the MIMO transceiver, wherein the calibration signal is fed to each of the antenna ports at a time for measuring the delays according to a measurement set; **characterized in that** the method comprises:
   - determining, on the basis of the measured delays, delay configurations for baseband signals fed to the RF frontend transmission paths for aligning timing of transmissions across the antenna ports;
   determining the delay configurations during a production and during a runtime operation of an apparatus comprising the MIMO transceiver, wherein the delay configurations determined during the production provide a production calibration and the one or more delay configurations determined during the runtime operation provide a runtime calibration;
   combining the production calibration with the runtime calibration.

2. The method according to claim 1, comprising:

   - determining a transmission configuration for a MIMO transmission by the RF frontend transmission paths;
   - determining a delay configuration corresponding to the transmission configuration;
   - applying the determined delay configuration;
   - transmitting the MIMO transmission.

3. The method according to claim 1 or 2, wherein the calibration signal comprises an unmodulated signal or a predefined transmission burst.

4. The method according to claim 3, wherein the predefined transmission burst is a single antenna transmission on a communications channel of a wireless communication system and the antenna port for the single antenna transmission is switched for measuring the delays on the basis of the single antenna transmissions on the communications channel and the calibration signal received at said one or more other antenna ports.

5. The method according to any of claims 1 to 4, comprising:

   - measuring the delays using single antenna transmissions; and

- in response to receiving a grant for a MIMO transmission on the communications channel, transmitting a MIMO transmission on the basis of a delay configuration determined on the basis of the measured delays based on the single antenna transmissions.

6. The method according to any of claims 1 to 5, wherein the measurement set comprises one or more parameters of a phase/time, power level, reference measurement antenna(s), frequency, phase shifter configuration, transmission antenna port, antenna tuner, configurable band pass filters, band of operation.

7. An apparatus comprising:

- means for measuring delays between a calibration signal fed to an antenna port via an RF frontend transmission path of a Multiple Input Multiple Output, MIMO, transceiver comprising a plurality of antenna ports connected to RF frontend transmission paths and the calibration signal received at one or more other antenna ports of the MIMO transceiver, wherein the calibration signal is fed to each of the antenna ports at a time for measuring delays according to a measurement set; **characterized in that** the apparatus comprises
- means for determining, on the basis of the measured delays, configurations for baseband signals fed for the RF frontend transmission paths for aligning timing of transmissions across the antenna ports;
- means for determining the delay configurations during a production and during a runtime operation of the apparatus comprising the MIMO transceiver, wherein the delay configurations determined during the production provide a production calibration and the one or more delay configurations determined during the runtime operation provide a runtime calibration;
- means for combining the production calibration with the runtime calibration.

8. The apparatus according to claim 7, comprising:

- means for determining a transmission configuration for a MIMO transmission by the RF frontend transmission paths;
- means for determining a delay configuration corresponding to the transmission configuration;
- means for applying the determined delay configuration;
- means for transmitting the MIMO transmission.

9. The apparatus according to claim 8, wherein the calibration signal comprises an unmodulated signal or a predefined transmission burst.

10. The apparatus according to claim 9, wherein the predefined transmission burst is a single antenna transmission on a communications channel of a wireless communication system and the antenna port for the single antenna transmission is switched for measuring the delays on the basis of the single antenna transmissions on the communications channel and the calibration signal received at said one or more other antenna ports.

11. The apparatus according to any of claims 8 to 10, comprising:

- means for measuring the delays using single antenna transmissions; and
- means for, in response to receiving a grant for a MIMO transmission on the communications channel;
- means for transmitting a MIMO transmission on the basis of a delay configuration determined on the basis of the measured delays based on the single antenna transmissions.

12. The apparatus according to any of claims 8 to 11, wherein the measurement set comprises one or more parameters of a phase/time, power level, reference measurement antenna(s), frequency, phase shifter configuration, transmission antenna port, antenna tuner, configurable band pass filters, band of operation.

Fig. 1

Fig. 2

Fig. 3

EP 3 806 354 A1

Fig. 4

502 measuring delays between a calibration signal fed to an antenna port via an RF frontend transmission path of a MIMO transceiver comprising a plurality of antenna ports connected to RF frontend transmission paths and the calibration signal received at one or more other antenna ports of the MIMO transceiver, wherein the calibration signal is fed to each of the antenna ports at a time for measuring at least one delay according to a measurement set

504 determining, on the basis of the measured delays, one or more delay configurations for baseband signals fed to the RF frontend transmission paths for aligning timing of transmissions across the antenna ports

Fig. 5

Fig. 6

EP 3 806 354 A1

Fig. 7

Fig. 8

IQ signals represented as Sine-curves

904

902

Reference time (Slowest)

TRX #1 (Port1)

TRX #2 (Port2)

TRX #3 (Port3)

TRX #4 (Port4)

φPort1
φPort2
φPort3

Fig. 9

EP 3 806 354 A1

Fig. 10

Europäisches
Patentamt

European
Patent Office

Office européen
des brevets

## EUROPEAN SEARCH REPORT

Application Number

EP 20 20 0561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/093282 A1 (MARTIKKALA RISTO [FI] ET AL) 15 April 2010 (2010-04-15)<br>* paragraph [0007] - paragraph [0010] *<br>* paragraph [0031] - paragraph [0034] *<br>* paragraph [0094]; figure 4 *<br>* paragraph [0097]; figure 6 *<br>* paragraph [0102] *<br>* claims 16, 22, 30, 39 *<br>----- | 1-12 | INV.<br>H04B17/14 |
| A | US 2016/308626 A1 (MOW MATTHEW A [US] ET AL) 20 October 2016 (2016-10-20)<br>* paragraph [0064] - paragraph [0066]; figures 7, 9 *<br>----- | 1-12 | |

TECHNICAL FIELDS
SEARCHED      (IPC)

H04B

The present search report has been drawn up for all claims

| Place of search | Date of completion of the search | Examiner |
|---|---|---|
| The Hague | 12 February 2021 | Riposati, Benedetto |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&  : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 20 0561

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2021

| Patent document cited in search report | Publication date | Patent family member(s) | Publication date |
|---|---|---|---|
| US 2010093282 A1 | 15-04-2010 | NONE | |
| US 2016308626 A1 | 20-10-2016 | US 2016308626 A1<br>US 2017230124 A1<br>US 2018219637 A1 | 20-10-2016<br>10-08-2017<br>02-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.104 V16.0.0,* September 2019
- *3GPP TS 38.104 V16.0.0,* June 2019